# EUROPÄISCHE PATENTANMELDUNG

(11) **EP 0 658 301 A1**
(43) Veröffentlichungstag der Anmeldung: **21.06.1995**
(21) Anmeldenummer: 94890193.9
(22) Anmeldetag: 23.11.1994
(51) Int. Cl.: A01C 7/00, A01C 7/20

(54) **Sämaschine und Verfahren zum Säen**

(30) Priorität: 23.11.1993 AT 2379/93
(71) Anmelder: Edinger, Otmar, A-1070 Wien (AT)
(72) Erfinder: Edinger, Otmar, A-1070 Wien (AT)
(74) Vertreter: Casati, Wilhelm, Dipl.-Ing.

(57) **Zusammenfassung**

Den Gegenstand der Erfindung bildet eine Sämaschine, deren Säscharen (1, 21) nicht nur in Fahrtrichtung (P) gezogen werden, sondern während der geradlinigen Fahrt der Sämaschine auch quer zur Fahrtrichtung (P) bewegt werden, derart, daß das Saatgut nicht in geradlinig, sondern in wellenförmig verlaufenden Reihen gesetzt wird. Hiebei kann ein Streueffekt quer zur Fortbewegungsrichtung durch die Querbeschleunigung der Säscharen (1, 21) erzielt werden; insbesondere an den Kuppen der Wellen wird das Streugut über die von den Säscharen (1, 21) erzeugte (geometrische) Wellenlinie hinaus verstreut, wodurch ein breitwurfiges Säen erreicht wird.

## Beschreibung

Den Gegenstand der Erfindung bildet eine Sämaschine und ein Verfahren zum Säen. Die Sämaschine weist einen Säkasten für das Saatgut auf. Vom Säkasten führen Säröhren zu den Säscharen. Über die Säröhren gelangt das Saatgut aus dem Säkasten in die Säscharen, über welche das Saatgut in den Ackerboden eingebracht wird.

Die Säscharen der erfindungsgemäßen Sämaschine werden im Betrieb beim Sävorgang nicht nur in Fahrtrichtung gezogen, sondern während der geradlinigen Fahrt der Sämaschine quer zur Fahrtrichtung bewegt, derart, daß das Saatgut nicht in geradlinigen, sondern in wellenförmigen Reihen gesetzt wird. Bei den Sämaschinen bekannter Bauart hingegen wird das Saatgut in geradlinig verlaufenden Reihen gesetzt, sodaß die entstehenden Pflanzen dichter hintereinander sitzen, im Vergleich zu einem Säverfahren, bei dem die Säscharen einen wellenförmigen Weg beschreiten, welcher infolge der "Sinusform" länger ist als der geradlinige Weg. Die entstehenden Pflanzen haben dann einen größeren Abstand voneinander, können besser bewurzeln und haben eine größere Standfestigkeit gegen Windbruch und Hagel.

In der erfindungsgemäßen Maschine sind die Säscharen um eine mindestens annähernd vertikal verlaufende Drehaxe schwenkbar, spornradartig, an Säscharträgern gelagert und die Drehaxen nach der Seite hin (quer zur Fortbewegungsrichtung der Sämaschine) bewegbar angeordnet. Durch die mit einer solchen Sämaschine erzielbare Wellenform des Weges der Säscharen ist es auch möglich, pro m² Ackerfläche eine etwa bis zu 20 % größere Menge von Saatgut zu setzen.

Zur gleichförmigen Verteilung des Saatgutes ist es zweckmäßig, wenn die Säscharen in inbesondere gleichen Abständen, nebeneinander an den quer zur Fahrtrichtung angeordneten Säscharträgern angeordnet sind.

Eine günstige Steuerung der Sämaschine ist erreichbar, wenn in besonderer Ausgestaltung der Erfindung zwei der quer zur Fahrtrichtung verlaufenden und in Fahrtrichtung voneinander beabstandeten Säscharträger über mindestens zwei parallel zueinander verlaufende, gleichlange Hebel miteinander gekoppelt sind, wobei jeder dieser Koppelhebel in seiner Mitte an einer Schwenkachse gelagert ist, die an einem Träger der Sämaschine befestigt ist, und wenn weiters die Koppelhebel, die ein Paar von Säscharträgern verbinden, gemeinsam mittels eines Antriebes jeweils um ihre Schwenkachse verschwenkbar sind. Für den Transport der Sämaschine auf der Straße muß eine Bodenberührung der Säscharen vermieden werden. Bei der erfindungsgemäßen Maschine ist dies in einfacher Weise dadurch erreichbar, daß der Träger der Koppelhebel um eine quer zur Bewegungsrichtung der Sämaschine verlaufende Achse schwenkbar gelagert ist und solcherart die Säscharen vom Ackerboden abhebbar sind.

In einer weiteren Ausführung ist es möglich, die Säscharträger in eine Stellung zu bringen, in der sie in Fahrtrichtung liegen und die Säscharen an den Enden der Säscharträger anzuordnen. Um mit einer solchen Maschine auf besonders einfache Weise einen wellenförmigen Verlauf der Reihen des Saatgutes zu erzielen, ist es zweckmäßig, die Säscharträger voneinander beabstandet und schwenkbar an einem ihnen gemeinsamen, bevorzugt quer zur Fortbewegungsrichtung der Sämaschine angeordneten Träger der Sämaschine zu lagern und jeweils zwei benachbarte Säscharträger über einen Antrieb gleichzeitig, jedoch gegensinnig zu verschwenken.

Bei Ausführung des erfindungsgemäßen Verfahrens werden die Säscharen, während die Sämaschine sich geradlinig bzw. im wesentlichen geradlinig fortbewegt, quer zur Fortbewegungsrichtung bewegt, wodurch das Saatgut in schlangenförmig verlaufenden Reihen gesetzt wird und gegebenenfalls durch seitliche Schleuderwirkung auch neben diese Reihen gelangt, wodurch ein breitwürfiges Säen erzielt wird.

Die Erfindung wird nachstehend anhand der Zeichnung beispielsweise näher erläutert. Es zeigen:
Fig. 1 in Seitenansicht im Schnitt nach der Linie I-I einen Teil einer Sämaschine, aus dem die Säscharbefestigung ersichtlich ist,
Fig. 2 die der Fig. 1 zugeordnete Draufsicht auf die Säscharbefestigung,
Fig. 2A eine Draufsicht entsprechend Fig. 2, jedoch ergänzt durch die Hebel, welche ein Gelenksparallelogramm ergeben,
Fig. 3 in Seitenansicht im Schnitt nach der Linie III-III der Fig. 4 einen Teil einer Sämaschine, aus dem eine gegenüber den Fig. 1 und 2 abgeänderte Ausführungsform einer Säscharbefestigung hervorgeht,
Fig. 4 die der Fig. 3 zugeordnete Draufsicht auf die Säscharbefestigung teilweise im Schnitt, und die
Fig. 5 - 7 in Draufsicht verschiedene Formen von Reihen des Saatgutes, wie diese bei Anwendung des erfindungsgemäßen Verfahrens erzielt werden können.

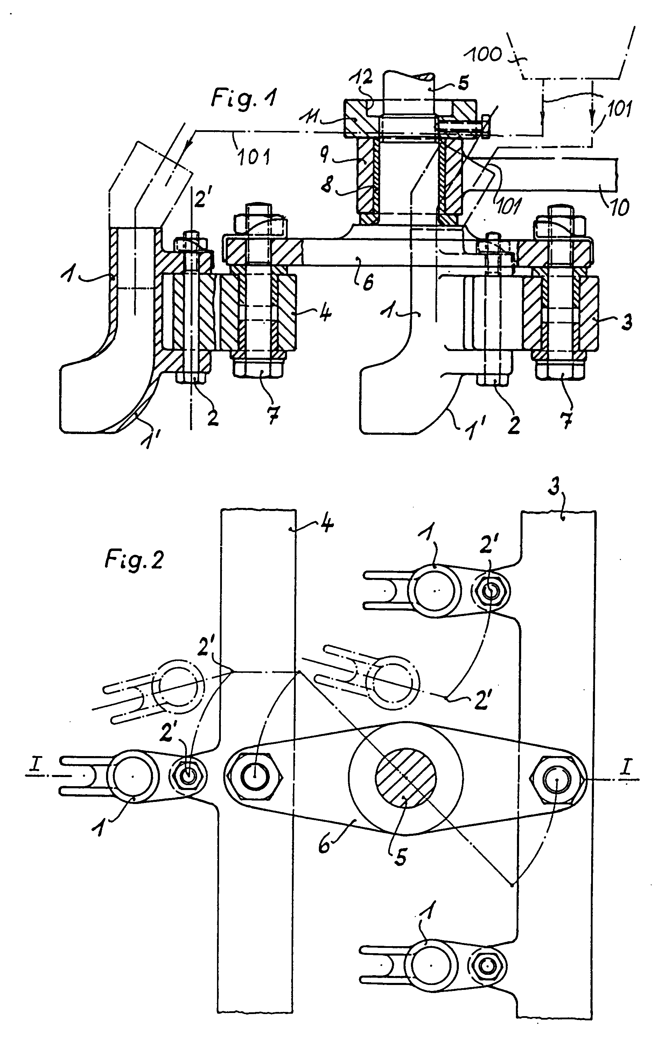

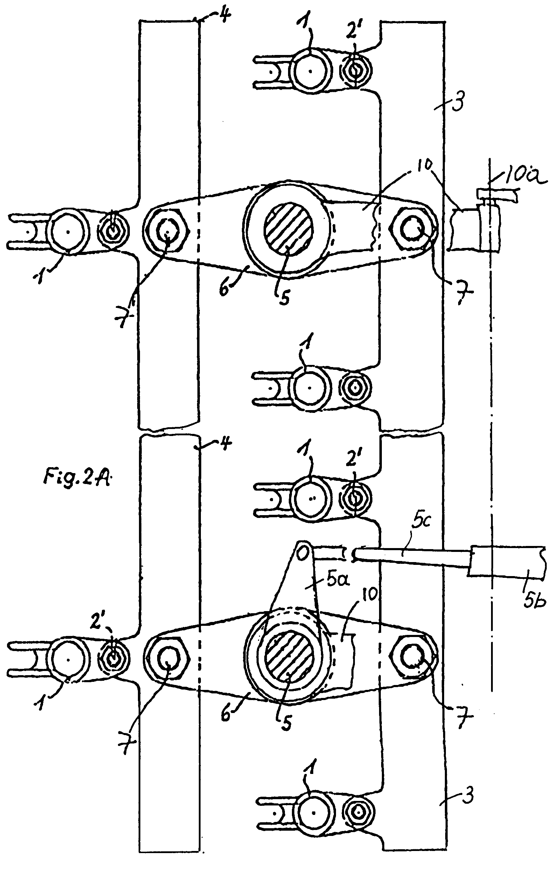

Wie die Fig. 1 und 2 zeigen, sind Säscharen 1 mittels in vertikaler Richtung verlaufenden Bolzen 2 an Säscharträgern 3 und 4 spornradartig schwenkbar befestigt. Es sind in Fahrtrichtung P die Säscharträger 3 und 4 voneinander beabstandet angeordnet. Die Säscharträger liegen parallel zueinander und jeder Säscharträger ist mit mehreren, gleichartig ausgebildeten Säscharen 1 versehen. Die Säscharen sind an den Säscharträgern bevorzugt unter gleichem, gegenseitigem Abstand angeordnet, wobei die Säscharen 1 des einen Säscharträgers 3 gegen die Säscharen 1 des zweiten Säscharträgers 3 um den halben Abstand zwischen den benachbarten Säscharen 1 auf einem Träger angeordnet sind (Versetzung um die halbe Teilung).

Die Säscharträger 3, 4 sind mittels mindestens zwei, jeweils um eine Achse 5 schwenkbaren, zweiarmigen Hebel 6 gekoppelt, an welchen sie mittels Bolzen 7 schwenkbar angelenkt sind. Die mindestens zwei vorgesehenen Koppelhebel 6 sind gleich lang und parallel zueinander angeordnet, so daß die beiden Säscharträger 3, 4 und die mindestens zwei Koppelhebel 6 ein Gelenksparallelogramm bilden. Die Achse 5 ist mittels einer Kragenbüchse 8 in einem Lagerauge 9 eines Trägers 10 der nicht dargestellten Sämaschine drehbar gelagert. Der Träger 10 ist um eine quer zur Bewegungsrichtung verlaufende Horizontalachse 10a hochschwenkbar, sodaß sich die Säscharen 1 vom Ackerboden abheben.

Die Achse 5 und die von ihr getragenen Teile 1 bis 4 sowie 6 und 7 sind durch einen Stellring 11 gehalten, der sich am Lagerauge 9 abstützt. Der Stellring 11 besitzt eine Ringnut 12, in welche Zentriernasen von (nicht dargestellten) Belastungsgewichten zum Einstellen der Eindringtiefe der Säscharen 1 in den Ackerboden, in bekannter Weise einrasten bzw. eingreifen. Die Belastungsgewichte sind erforderlich, um abhängig vom Saatgut verschiedene Setztiefen der Säscharen 1 zu erreichen. Der in den Ackerboden eindringende untere Teil 1' einer jeden Säschar 1 ist, wie gezeichnet, bogenförmig ausgebildet, sodaß beim Eindringen in den Ackerboden nach oben gerichtete Kräfte entstehen, welche im Sinne eines Anhebens der Säschar 1 wirken. Um die Setztiefe dem Saatgut anzupassen, müssen die Säscharen 1 entsprechend belastet werden. Die Belastung, die zur Erreichung einer bestimmten Setztiefe erforderlich ist, hängt von der Konsistenz der Ackererde ab.

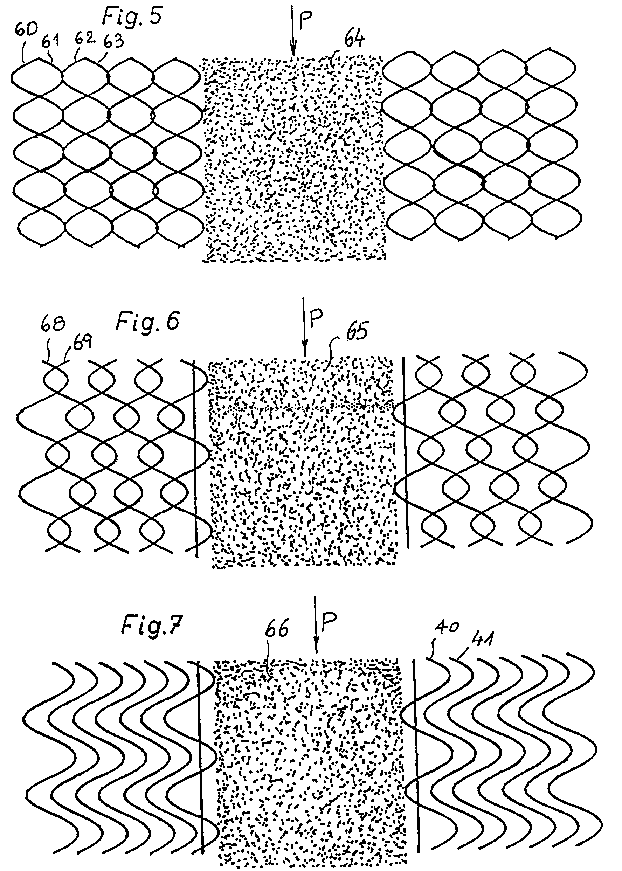

Werden die Säscharen 1, wie in Fig. 2 dargestellt, in Fahrtrichtung P über den Ackerboden gezogen, so wird das Saatgut, das über den Kanal 1" der Säschar ankommt, nachdem es aus dem Säkasten 100 über die Säröhren 101 in den Kanal 1" gelangte, wie bei den bekannten Sämaschinen, in geradlinig verlaufenden Reihen gesetzt. Beim erfindungsgemäßen Verfahren werden die Säscharen 1 zusätzlich zur Bewegung in Fahrtrichtung P nach der Seite hin, also quer zur Fahrtrichtung hin und her bewegt, sodaß das Saatgut in schlangenförmig verlaufenden Reihen (Fig. 5 - 7) gesetzt wird. Die Achse 5 des Koppelhebels 6 wird abwechselnd etwa um 90° im Uhrzeigersinne und anschließend entgegen dem Uhrzeigerdrehsinn angetrieben, wodurch die Drehaxen 2' der Bolzen 2 um die Drehaxe der Achse 5 entlang einer kreisbogenförmigen Bahn bewegt werden. Die Säscharen 1 stellen sich dabei, den Drehaxen 2' folgend, wie ein Spornrad schräg zur Fahrtrichtung ein und erzeugen im Ackerboden eine sinusförmige Kurve. Der Schwenkwinkel der Achse 5 sowie die Schwenkgeschwindigkeit, können dem Bedarf entsprechend verändert und eingestellt werden. Zum Drehen der Achse 5 können Gelenkwellen, Getriebe und Kurbeltriebe, jedoch beispielsweise auch Pneumatikzylinder 5b vorgesehen werden, deren Kolbenstange 5c an einer mit der Achse 5 drehschlüssig verbundenen Kurbel 5a angreift. Durch Wahl der Länge des Koppelhebels 6 sowie des Abstandes zwischen den Säscharen 1 auf den Säscharträgern 3 bzw. 4 kann die Wellenform der Setzreihen für das Saatgut verändert werden. Die Länge der Säscharträger 3 bzw. 4 kann nach Bedarf und Verwendungszweck, z.B. 3,5 m oder auch nur 0,5 m betragen. Kurze Säscharträger passen sich besser an Bodenunebenheiten an, so daß die Biegesteifigkeit der Träger 3 und 4 geringer gehalten werden kann.

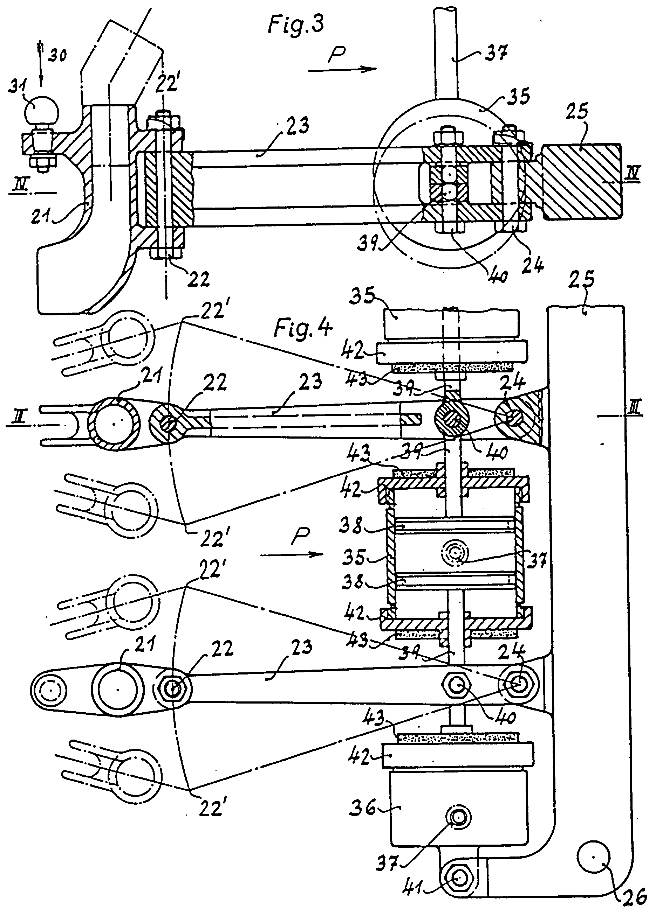

Bei einer modifizierten Ausbildung des Erfindungsgegenstandes, wie sie in den Fig. 3 und 4 gezeigt ist, sind die Säscharen 21 einzeln an den Säscharträgern 23 mittels Bolzen 22 befestigt. Die Säscharträger 23 sind je mittels eines Bolzens 24 schwenkbar an einem allen Säscharträgern gemeinsamen Träger 25 befestigt. Die Länge des Trägers 25 ist beliebig. Zur Befestigung an der nicht dargestellten Sämaschine und zum Anheben (Justieren) des Trägers 25 dienen in an sich bekannter Weise Schrauben, die in Bohrungen 26 des Trägers 25 sitzen.

Die Schwenklagerung der Säscharträger 23 an dem Träger 25 ist mit axialem Spiel ausgeführt, so daß sich die Säscharen 21 in vertikaler Richtung in einem dem Spiel entsprechenden Maß bewegen können, wodurch sich die Säscharen dem Gelände besser anpassen können.

Die Säscharen 21 sind in Pfeilrichtung 30, entsprechend der erforderlichen Eindringtiefe in die Ackererde belastet. Gewichte würden eine schnelle Seitenbewegung der Säscharen 1 behindern. Aus diesem Grund können zur Eindringtiefenregulierung nicht dargestellte Preßluftzylinder angeordnet werden, die über Gestänge in Richtung des Pfeiles 30 auf den Kugelkopf 31 einer jeden Säschar 21 einwirken.

Zur Bestätigung (Verschwenkung um die Achse 24) der Säscharträger 23 sind zwischen diesen Preßluftzylinder 35 und an den Enden des Trägers 25 je ein einfach wirkender Preßluftzylinder 36 angeordnet. In dem Preßluftzylinder sind zwei Kolben 38 gelagert, die nicht miteinander verbunden sind. Die Kolbenstange 39 eines jeden Kolbens 38 greift an dem dem jeweiligen Kolben 38 benachbarten Säscharträger 23 an, der mit einem Bolzen 40 versehen ist, auf den ein am Ende der Kolbenstange 39 befindliches Auge aufgeschoben ist. An die Preßluftzylinder 35, 36 sind Preßluftschläuche 37 angeschlossen, über welche Preßluft in den Raum zwischen die Kolben 38 der mit jeweils zwei Kolben versehenen Preßluftzylinder 35 zuführbar ist. Im Betrieb der Sämaschine wird jeweils jeder zweite Preßluftschlauch 37 mit Preßluft beaufschlagt, wobei der jeweils zwischen beaufschlagten Preßluftzylindern liegende unbeaufschlagte Zylinder entlüftet wird. Der endständige Preßluftzylinder 36 ist mittels eines Bolzens 41 am Träger 25 angelenkt. In den Zylinderdeckeln 42 der Preßluftzylinder 35, 36 sind Bohrungen vorgesehen (nicht dargestellt), sodaß die deckelseitigen Zylinderräume (zwischen den Kolben 38 und den Zylinderdeckeln 42 befindlich) mit dem Außenraum - gegebenenfalls unter Zwischenschaltung von Filtern 43 - verbunden sind und entlüftet werden können, wenn sich der Kolben 38 in Richtung auf den Zylinderdeckel 42 bewegt. Wird jedem zweiten der Preßluftzylinder 35 abwechselnd Preßluft zugeführt, so werden die Säscharträger 23 um die Bolzen 24 in die strichpunktiert dargestellte Schräglage, wechselnd rechtsdrehend bzw. linksdrehend, verschwenkt, wobei die Drehaxen 22' wechselnd in die strichpunktiert gezeichneten Endlagen kommen.

Bei beiden in der Zeichnung dargestellten Ausführungsformen sind die Säscharen 1 bzw. 21 in zwei Gruppen unterteilt, wobei die Säscharen der einen Gruppe in entgegengesetzter Richtung zu den Säscharen der zweiten Gruppe quer zur Fortbewegungsrichtung P der Sämaschine bewegt werden. Dadurch kann annähernd ein Ausgleich der von den Säscharen auf die Sämaschine übertragenen Kräfte erzielt werden, was den Geradlauf der Maschine erleichtert.

Wie aus Fig. 5 ersichtlich, ist die Reihe 60, die von einer Säschar erzeugt wird, von gleicher Amplitude und Elongation wie die Reihe 61, die von der benachbarten Säschar erzeugt wird, jedoch entgegengesetzt zu dieser. An die Reihe 61 schließt eine Reihe 62 an, welche in ihrer Form der Reihe 60 entspricht, wobei die Talsohlen der Reihe 61 die Kuppen der Reihe 62 berühren. An die Reihe 62 schließt eine Reihe 63 analog zum Anschluß der Reihe 61 an die Reihe 60 an. Weitere Reihenformen sind den Fig. 6 und 7 zu entnehmen. Gemäß Fig. 6 überlappen die Reihen 68 und 69 einander. In Fig. 7 sind die Reihen 40 und 41 im wesentlichen parallel, so daß keine Überlappung auftritt. Die in den Fig. 5, 6 und 7 mit 64, 65 und 66 bezeichneten Streifen können auch frei von Saatgut gehalten werden, etwa dadurch, daß den Säscharen, die in dem Bereich der Streifen 64, 65 und 66 liegen, kein Saatgut zugeführt wird. Die entsprechenden Saatgutrohre 101 werden etwa durch Schieber verschlossen, wogegen den außerhalb der Reihen 64, 65 und 66 liegenden Säscharen Saatgut zugeführt wird. Auch kann die Sämaschine so eingerichtet sein, daß in der Breite der Streifen 64, 65 und 66 entsprechendem Abstand keine Säscharen eingebaut sind.

## Patentansprüche

1. Sämaschine mit Säkasten, Säröhren und Säscharen, dadurch gekennzeichnet, daß die Säscharen (1, 21) um eine mindestens annähernd vertikal verlaufende Drehaxe (2', 22') schwenkbar, spornradartig, an Säscharträgern (3, 4, 23) gelagert und die Drehaxen (2', 22') nach der Seite hin (quer zur Fortbewegungsrichtung P der Sämaschine) bewegbar angeordnet sind.

2. Sämaschine nach Anspruch 1, dadurch gekennzeichnet, daß die Säscharen (1) in insbesondere gleichen Abständen nebeneinander an den quer zur Fahrtrichtung angeordneten Säscharträgern (3, 4) angeordnet sind (Fig. 1, 2).

3. Sämaschine nach Anspruch 2, dadurch gekennzeichnet, daß zwei der quer zur Fahrtrichtung verlaufenden und in Fahrtrichtung (P) voneinander beabstandeten Säscharträger (3, 4) über mindestens zwei parallel zueinander verlaufende, gleichlange Hebel (6) miteinander gekoppelt sind, wobei jeder dieser Koppelhebel (6) in seiner Mitte an einer Schwenkachse (5) gelagert ist, die an einem Träger (10) der Sämaschine befestigt ist und daß die Koppelhebel (6), die ein Paar von Säscharträgern (3, 4) verbinden, gemeinsam mittels eines Antriebes jeweils um ihre Schwenkachsen (5) verschwenkbar sind (Fig. 1,2)

4. Sämaschine nach Anspruch 3, dadurch gekennzeichnet, daß der Träger (10) der Koppelhebel (6) um eine quer zur Bewegungsrichtung (P) der Sämaschine verlaufende Achse schwenkbar gelagert ist und solcherart die Säscharen (1) vom Ackerboden abhebbar sind (Fig. 1, 2).

5. Sämaschine nach Anspruch 1, dadurch gekennzeichnet, daß die Säscharträger (23) in Fahrtrichtung anordenbar sind und daß die Drehaxen (22') der Säscharen (21) an den Enden der Säscharträger (23) angeordnet sind (Fig. 3, 4).

6. Sämaschine nach Anspruch 5, dadurch gekennzeichnet, daß die Säscharträger (23), voneinander beabstandet und schwenkbar an einem ihnen gemeinsamen, bevorzugt quer zur Fortbewegungsrichtung (P) der Sämaschine angeordneten Träger (25) der Sämaschine gelagert sind und daß jeweils zwei benachbarte Säscharträger (23) über einen Antrieb gleichzeitig, jedoch gegensinnig verschwenkt werden können.

7. Verfahren zum Säen, unter Verwendung einer Sämaschine nach einem der Ansprüche 1 bis 6, dadurch gekennzeichnet, daß die Säscharen (1, 21), während die Sämaschine sich geradlinig bzw. im wesentlichen geradlinig fortbewegt, quer zur Fortbewegungsrichtung bewegt werden, wodurch das Saatgut in schlangenförmig verlaufenden Reihen (Fig. 5 bis 7) gesetzt wird, und gegebenenfalls durch seitliche Schleuderwirkung in die Nähe dieser Reihen, jedoch außerhalb der Reihen gelangt, wodurch ein breitwürfiges Säen erzielt wird.

8. Verfahren nach Anspruch 7, dadurch gekennzeichnet, daß die Säscharen in zwei Gruppen unterteilt sind, wobei die Säscharen der einen Gruppe in entgegengesetzter Richtung zu den Säscharen der zweiten Gruppe quer zur Fortbewegungsrichtung der Sämaschine bewegt werden, um annähernd einen Ausgleich der von den Säscharen auf die Sämaschine übertragenen Kräfte zu erzielen und damit den Geradlauf der Sämaschine zu erleichtern.
